(19) Europäisches Patentamt
European Patent Office
Office européen des brevets

(11) EP 0 529 558 B1

## (12) EUROPEAN PATENT SPECIFICATION

(45) Date of publication and mention
of the grant of the patent:
**16.04.1997   Bulletin 1997/16**

(51) Int Cl.⁶: **G01S 11/12**, G01S 3/786

(21) Application number: **92114393.9**

(22) Date of filing: **24.08.1992**

(54) **Inter-car distance detecting device**

Entfernungsmesser für Abstand zwischen Fahrzeugen

Dispositif de mesure de la distance entre véhicules

(84) Designated Contracting States:
**DE FR GB**

(30) Priority:  **28.08.1991   JP 216836/91**

(43) Date of publication of application:
**03.03.1993   Bulletin 1993/09**

(73) Proprietor: **MITSUBISHI DENKI KABUSHIKI KAISHA**
**Tokyo 100 (JP)**

(72) Inventor: **Karasudani, Keiko,**
**c/o Mitsubishi Denki K.K.**
**Himeji-shi, Hyogo (JP)**

(74) Representative: **Lehn, Werner, Dipl.-Ing. et al**
**Hoffmann, Eitle & Partner,**
**Patentanwälte,**
**Postfach 81 04 20**
**81904 München (DE)**

(56) References cited:
**FR-A- 2 611 053          US-A- 4 931 937**

EP 0 529 558 B1

**Description**

BACKGROUND OF THE INVENTION

(Field of the Invention)

FR-A-2 611 053 discloses an inter-car distance detecting device including two cameras, a monitoring video means and a means for setting a small square in a display area. On the basis of a stereoscopic technique, the distance to a predetermined point is calculated. A coordinator checks a cross in said square by forming comparator windows and on the basis of the mutual correlation therebetween, the coordinator selects one of the new comparator windows, into which the reference cross has been moved. The correlation technique is based on a Taylor series expansion.

US-A-4 931 937 describes a distance detector mounted on a vehicle, where the concentration degree of features of a preceding vehicle, such as the edges extract from the image of the vehicle, is searched on the basis of such features in order to define a region, where a vehicle image is subjected to distance detecting. This distance detector does not relate to the tracking of a vehicle running ahead. What is done here is the vertical and horizontal differentiation to detect the contours of an obstacle such as the preceding car. The individual line segments are "labeled". When the labeling with respect to the vertical or horizontal differentiation is completed, then the line segment furthest downward becomes the center in the Y-direction of the window screen. Thus, the bottom line will be placed in the center of the window, rather than the image itself.)

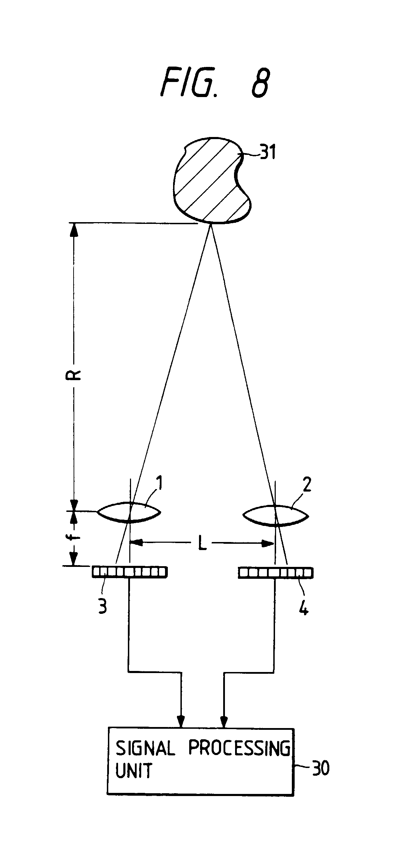

Optical distance detecting devices have been further disclosed, for instance, in Japanese Patent Application Publication No's 38085/1988 and 46363/1988. Each of those conventional optical distance detecting devices, as shown in FIG. 8, has two optical systems respectively on the right and left sides. The two optical systems are made up of lenses 1 and 2 which are spaced from each other as much as a base length L.

Two image sensors 3 and 4 are provided at the focal points of the lenses 1 and 2, respectively, to output image signals, which are applied to a signal processing unit 30. The signal processing unit 30 electrically superimposes the image signals on each other while shifting them successively. The amount of shift (n) is detected when the two image signals coincide best, so that the distance R to the object 31 is obtained, according to the principle of trigonometrical measurement, represented by the following equation:

$$R = f \times L / n$$

On the other hand, Japanese Patent Application Publication No. 33352/1985 discloses a method of tracking the image of a car running ahead, which has been detected by an image sensor or the like. In this method, the operator sets a tracking gate (or window), which surrounds an object to be tracked, in the display screen while watching it, so that the image of the object is tracked on the display screen.

With the former conventional distance detecting device, the images detected by the right and left optical systems are subjected to comparison, to obtain the distance to the object under measurement. The device may be installed on a motor car, to measure the distance between the motor car (hereinafter referred to as "a first car") and another motor car running ahead of the first car (hereinafter referred to as "a second car"). However, if, in this case, a further motor car different from the second car is running on the right or left side of the second car (hereinafter referred to as "a third car"), then the operator cannot determine which of the cars is under measurement.

On the other hand, in the latter conventional distance detecting device, the method of tracking the image of the second car which has been detected by the image sensor suffers from the following difficulties: A conventional image tracking device is so designed that an operator sets a gate (or window), which surrounds a target to be tracked, in the display screen while watching it, thereby to track the image of the target. In the case where the device is installed on his motor car to track the image of a motor car running ahead of his motor car during traveling, he, while driving his car, has to watch the display screen to set the window in such a manner that it surrounds the image of the motor car running ahead. Hence, the position of the window thus manually set may be shifted from the image of the aimed motor car.

Furthermore, while the operator is setting the window while watching the display screen, his attention to the outside is liable to be distracted, so that his detection of dangerous conditions occurring outside, or his action against them may be delayed. In addition, when his car is vibrated because the road is uneven or the engine is vibrated, the window tracking the image of the car running ahead is shifted to the right or left of it.

SUMMARY OF THE INVENTION

Therefore, the object of the present invention is

- the provision of an inter-car distance detecting device which can still accurately check a car running ahead and calculate the distance thereto, even in a running state on a road which is uneven or sloped or causing vibration or bouncing of the car under measurement and the measuring car.

This object is solved by an inter-car distance detecting device according to claim 1. Further advantageous embodiments and improvements of the invention can be taken from the dependent claims 2 to 5.

The advantage of the inter-car distance detecting device according to the invention is that even when a target selected is moved, the distance to the target can be continuously measured as long as it is in the field of sight, and that even in the case where there are a plurality of motor cars running ahead, it can be detected which of the cars is under distance measurement, and the operator can accurately, efficiently and safely set the window for tracking the image of a motor car running ahead while driving his motor car, so that the image of the car can be tracked with high stability.

The inter-car distance detecting device of the invention calculates the distance between the first and second cars by detecting the amount of shift between the upper and lower image signals with the image signal in the window as a reference signal, and operates to monitor and correct the position of the tracking window according to the image signal data in the tracking window from the time when the tracking window is set by an operator.

## BRIEF DESCRIPTION OF THE DRAWINGS

FIG. 1 is an explanatory diagram showing the arrangement of an inter-car distance detecting device according to this invention;

FIG. 2 is an explanatory diagram showing a state that the image of a second car running ahead of a first car on which the device of the invention is installed comes in the display screen of the device, and the operator sets a tracking window while watching the display screen;

FIG. 3 is an explanatory diagram for a description of an operation that it is determined whether or not the right and left parts of the image in the tracking window are symmetrical, and according to the result of determination the tracking window set manually is shifted to include the image of the second car at the middle;

FIG. 4 is an explanatory diagram showing an operation of changing the position of the window while the image of the second car is being tracked with the window;

FIG. 5 is a diagram showing the display screen indicating search ranges provided for shifting the window which has been set manually;

FIG. 6 is also a diagram showing the display screen indicating search ranges provide for shifting the window with which the image of the second car is being tracked;

FIG. 7 is a diagram showing the display screen indicating an image region stored in a memory compared with the image in the window; and

FIG. 8 is an explanatory diagram showing the structure of a conventional distance detecting device.

## DETAILED DESCRIPTION OF THE PREFERRED EMBODIMENTS

One preferred embodiment of this invention will be described with reference to the accompanying drawings.

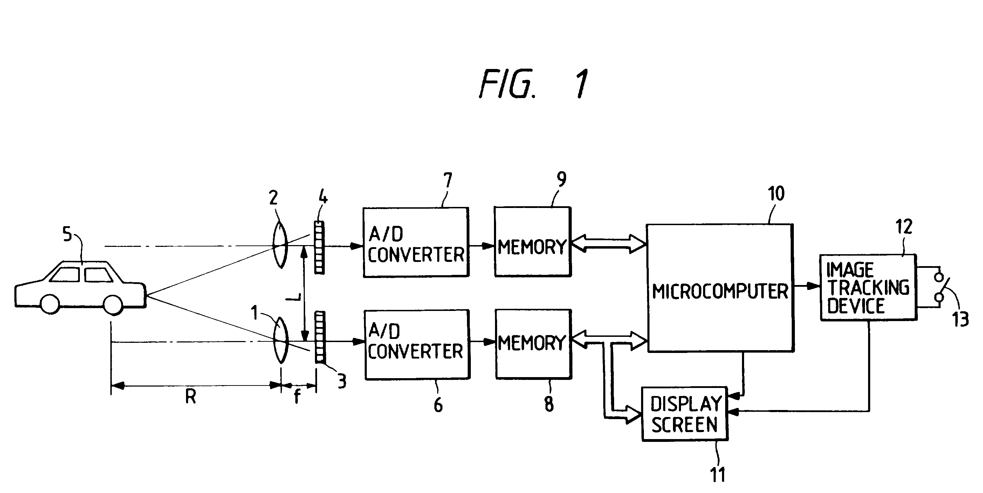

In FIG. 1, reference numerals 1 and 2 designate lenses forming the upper and lower optical systems; 3 and 4, two-dimensional image sensors provided for the lenses 1 and 2, respectively; 5, a motor car to be tracked (hereinafter referred to as "a second car") which is running ahead of a motor car on which an inter-car distance detecting device is installed (hereinafter referred to as "a first car"); 6 and 7, analog-to-digital converters; 8 and 9, memories; 10, a microcomputer; and 11, a display screen for displaying an image detected by the lower image sensor, the display screen 11 being controlled by the microcomputer 10.

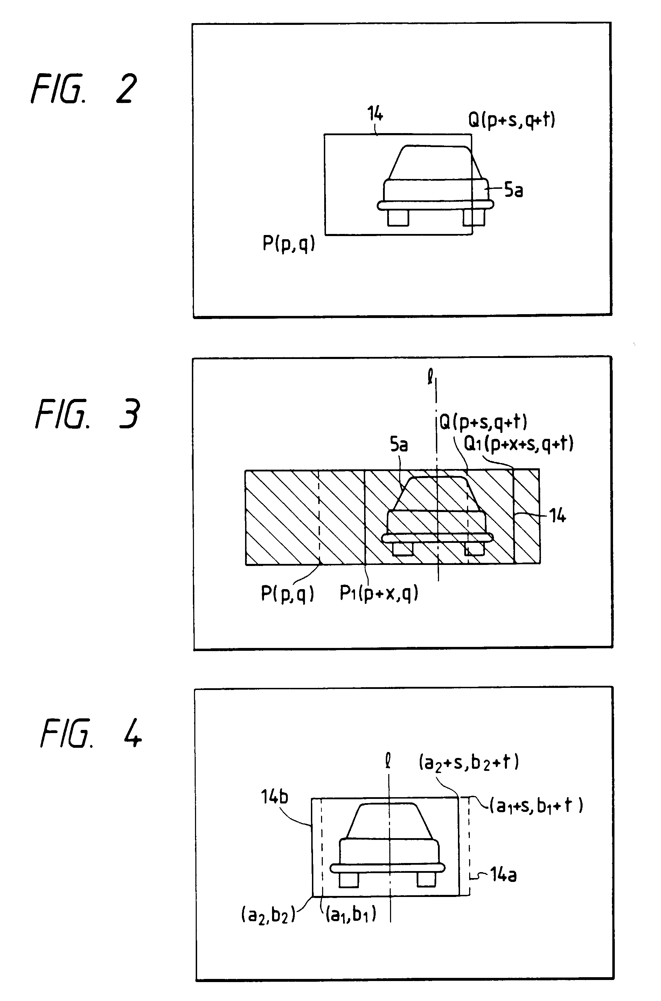

Further in FIG. 1, reference numeral 12 designates an image tracking device. The image tracking device 12 forms a window 14 for tracking the image 5a of the second car 5 in the display screen 11 as shown in FIG. 3, and tracks the image 5a surrounded by the window 14. The image tracking function of the device 12 includes a function of changing the position of the window 14 so that the right and left parts of the image in the window are symmetrical. Reference numeral 13 designates an image tracking instruction switch which is operated by an operator.

Hereinafter, the operation of the inter-car distance detecting device thus organized will be described.

It is assumed that the second car's image 5a to be tracked coming in the image provided by the lower image sensor 3, and the operator has set the window 14 so that it surrounds the second car's image 5a in the display screen 11 while watching the image 5a, as shown in FIG. 2. When, under this condition, the tracking instruction switch 13 is operated, the function of correcting the position of the window 14 is performed so that the latter 14 includes the second car's image 5a at the middle thereof, before tracking the second car's image 5a with the window 14 is started.

That is, referring to the images in and around the window 14, the latter 14 is moved to the position where lateral symmetry is highest. This will be described more concretely. It is assumed that, in FIG. 2, the window 14 is ranged from P (p,q) to Q (p+s, q+t) in a picture element coordinate system. The image having an area of (s x t) is moved horizontally in the range shaded in FIG. 3 until the image is obtained which is highest in lateral symmetry. That is, if it is assumed that the image signal of each picture element is represented by Sij (ij being the x and y components of a picture element in the display screen), the following equation is established:

$$Dxy = \sum_{n=q}^{q+t} \sum_{m=o}^{q+2} | Se-mn - Se+mn| \qquad \ldots\ldots(1)$$

(e = p + x + s/2, y = n)

In this equation, x is changed gradually, and x with which Dxy is minimum is determined. And, the window 14 is moved from Pl (p+x, q) to Ql (p+x+s, q+t).

The window 14 is moved in the above-described manner so that it includes the second car's image 5a correctly, and thereafter the tracking the second car's image 5a is automatically started. Once the tracking of the second car's image 5a is started in this way, the window 14 follows the movement of the second car's image 5a no matter how the latter 5a moves in the display screen 11. The above-described operation of tracking an image by the image tracking device 12 is the same as that disclosed by Japanese Patent Application Publication No. 33352/1985 or 35305/1989, and therefore it is omitted to further describe it herein.

As a matter of fact, the road is uneven or sloped, and therefore both the first car on which the device is installed, and the second car 5 under measurement running ahead of the first car bounce or vibrate. If, in this case, the vibration is large, then sometimes the window is laterally shifted with respect to the image 5a of the second car under measurement as indicated at 14a in FIG. 4. In order to eliminate this difficulty, it is necessary to correct the position of the window 14a so that the latter 14a includes the second car's image 15 at the middle at all times. In order to correct the position of the window 14, similarly as in the case of displacing the window which has been set manually, the window is moved so that the right and left parts of the image in the window are symmetrical.

If it is assumed that, as shown in FIG. 4, the window 14a is ranged from a point (a1, b1) to a point (a1+s, b1+t) in the picture element coordinate system, and the image signal of each picture element is represented by Sij (ij being the x and y components of a picture element in the display screen), then the following equation is established:

$$Dxy = \sum_{n=b1}^{b1+t} \sum_{m=0}^{a/2} | Se-mn - Se+mn| \qquad \ldots\ldots(2)$$

(e= a1 + x + s/2, y = n)

In this equation, x is changed gradually, and the window is moved to the position where Dxy is minimum. Thus, as shown in FIG. 4, the window is moved from the position 14a to the position 14b; that is, it is so moved as to occupy an area from a point (a2, b2) to a point (a2+s, b2+t) in the picture element coordinate system.

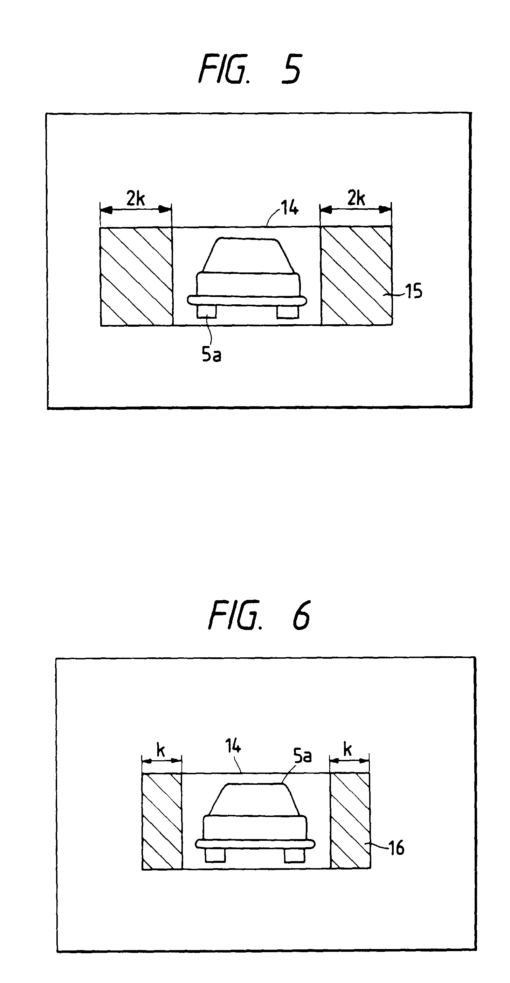

In this invention, the range which is searched for the image highest in lateral symmetry thereby to correct the position of the window 14, is determined as follows: That is, in the case of changing the position of the window 14 set manually, the ranges 2k are provided on both sides of the window are searched as shown in FIG. 5; and in the case of tracking the second car's image with the window 14, the ranges k are searched as shown in FIG. 6.

This is because the amount of shift of the window 14 from the second car's image 5a in the case where it is manually set is larger than when the second car's image 5a is tracked with the window 14. In the embodiment, the sum of the searching ranges employed in the case where the window is manually set is twice as large as that of the searching ranges used in the case where the window 14 tracks the image of the second car running ahead of the first car; however, the invention is not limited thereto or thereby. That is, the searching ranges can be changed freely depending, for instance, on the characteristics of the image tracking device 12.

Hereinafter, a method of detecting the distance between the first car on which the device is installed and the second car running ahead of the first car, will be described.

First, the microcomputer 10 reads from the memory 8 a pixel signal in the window 14 which is tracking the image 5a of the second car, and employs it as a reference image signal. Then, the microcomputer 10 makes access to the memory 9 in which the image signal of the upper image sensor 4 has been stored, to select the region corresponding to the window 14; that is, the microcomputer 10, while shifting the image signal of the memory 9 one pixel by one pixel with respect to the aforementioned reference image signal, calculates the sum of the absolute values of the differences between the signals of upper and lower pixels.

In other words, the microcomputer 10 determines the position of the image which matches best with the image in the window 14, while shifting the image signal one pixel by one pixel.

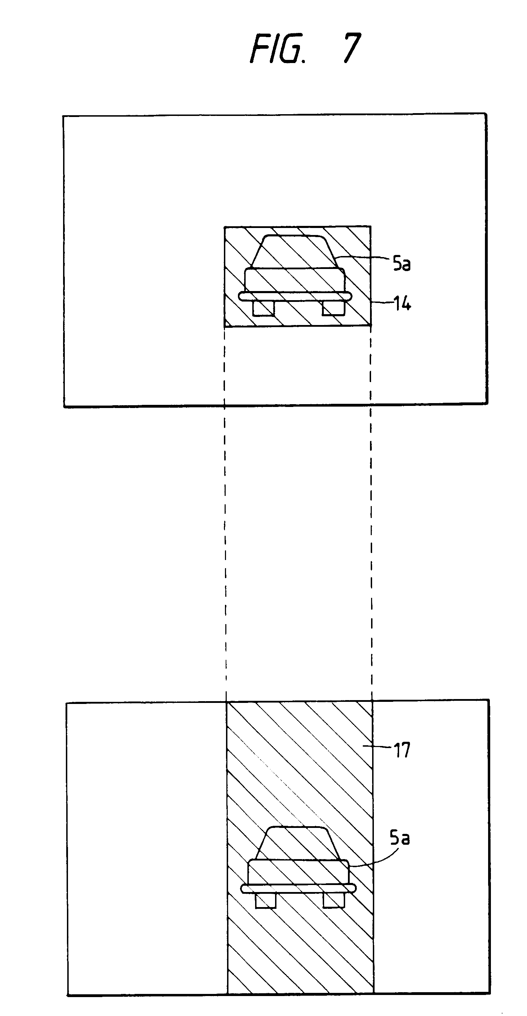

In this operation, as shown in FIG. 7, the region 17 in the memory 9, which corresponds to the position of the window 14, concerns the calculation. Thus, if it is assumed that the amount of shift of the pixel is represented by (n) which is detected when upper and lower pixels are subjected to comparison and the sum of the absolute values of the differences between the signals thereof is minimum, then the distance R to the second car running ahead can be obtained from the following equation:

$$R = f \times L/n \times P$$

where P is the pitch or distance of the pixels; L is the base length of the optical systems, and f is the focal distance of the lenses 1 and 2.

Thus, even when, after the window 14 has been set for the.second car's image, the latter is moved laterally in the display screen, it can be tracked with the window, to continuously detect the distance between the first and second cars.

While one preferred embodiment of the invention has been described in detail, it should be noted that the invention is not limited thereto or thereby. Particularly, as for the window position changing means, other means may be employed depending on the characteristics of the image tracking device and those of image signal data. That is, it goes without saying that the above-described method shows only one aspect of the invention.

As was described above, the inter-car distance detecting device of the invention comprises: the image sensor for detecting the image of the second car running ahead of the first car on which the device is installed, with one pair of substantially upper and lower optical systems; the display means for displaying the image of the second car which is detected by one of the image sensors; the image tracking means for forming the tracking window to surround the image of the second car, and tracking the image of the second car with the tracking window; distance detecting means for calculating a distance between the first and second cars by detecting the amount of shift between the upper and lower image signals with the image signal in the window as a reference signal; and the position changing means for changing, before tracking the image of the second car with the tracking window is started and while the image of the second car is being tracked with the tracking window, the position of the tracking window surrounding the image of the second car according to image signal data in the tracking window.

Hence, with the inter-car distance detecting device of the invention, even when a plurality of second cars are running ahead of the first car, the aimed second car is indicated by the tracking window, and therefore the operator can detect the second car with ease the image of which is being tracked to detect the distance thereto. Furthermore, the position of the window set manually by the operator can be changed, with the result that setting the window can be achieved quickly, safely and accurately. In addition, the position of the window can be changed while the image of the second car is being tracked with the window. Therefore, the image of the second car can be tracked with high stability.

## Claims

1. An inter-car distance detecting device for measuring a distance (R) between a first car (5) and a second car (5a) running ahead of the first car (5) according to the principle of trigonometrical measurement, comprising the following features:

   a) a pair of optical systems (1, 2) spaced from each other by a base length (L);

   b) a pair of image sensors (3, 4) provided correspondingly to said optical system (1, 2), on which an image of said second car (5a) is focused through said optical system (1, 2) to provide an image signal;

   c) means (7-11) for displaying the image of said second car which has been detected by one of said image sensors (3, 4);

   d) means (10, 12) for forming a tracking window (14) which surrounds the image of said second car (5a), and for tracking the image (5a) of said second car with said tracking window (14);

   e) means (10) for detecting the amount of shift between said image signals of said image sensors with an image signal in said window as a reference signal to calculate a distance between said first (5) and second (5a) cars;

f) means for correcting (14a->14b), before tracking the image of said second car with said tracking window is started and while the image of said second car is being tracked with said tracking window (14), the position of said tracking window (14a) surrounding the image of said second car (5a) according to image signal data in said tracking window (14); and

g) wherein said position correction means moves the position of said tracking window (14), so that the right and left parts of the image in said tracking window (14) are symmetrical.

2. A device as claimed in claim 1, further comprising memory means (8, 9) for storing said image signal from said image sensors (3, 4).

3. A device as claimed in claim 1, wherein said pair of optical systems (1, 2) are substantially vertically arranged.

4. A device as claimed in claim 1, further comprising a switch (13) operative to instruct an image tracking means (10, 12) by an operator.

5. A device as claimed in claim 1, wherein said position correction means, before said tracking of said second car with said tracking window is started, positions said tracking window (14) by using a first search range (2k) provided on both sides of said tracking window and, when the image of said second car is being tracked with said tracking window (14), positions said tracking window (14) by using a second search range (1k) on both sides of said tracking window, which is smaller than said first search range (2k).

## Patentansprüche

1. Fahrzeugzwischenabstands-Erfassungseinrichtung zum Messen eines Abstands (R) zwischen einem ersten Fahrzeug (5) und einem zweiten Fahrzeug (5a), welches vor dem ersten Fahrzeug (5) fährt, gemäß dem Prinzip einer trigonometrischen Messung, umfassend die folgenden Merkmale:

a) ein Paar von optischen Systemen (1, 2), die zueinander in einem Abstand einer Basislänge (L) liegen;

b) ein Paar von Bildsensoren, (3, 4), die entsprechend zu dem optischen System (1, 2) vorgesehen sind und auf denen ein Bild des zweiten Fahrzeugs (5a) durch das optische System (1, 2) fokussiert wird, um ein Bildsignal bereitzustellen;

c) eine Einrichtung (7 - 11) zum Anzeigen des Bildes des zweiten Fahrzeugs, welches von einem der Bildsensoren (3, 4) erfaßt worden ist;

d) eine Einrichtung (10, 12) zum Bilden eines Verfolgungsfensters (14), welches das Bild des zweiten Fahrzeugs (5a) umgibt, und zum Verfolgen des Bilds (5a) des zweiten Fahrzeugs mit dem Verfolgungsfenster (14);

e) eine Einrichtung (10) zum Erfassen des Verschiebebetrags in den Bildsignalen der Bildsensoren mit einem Bildsignal in dem Fenster als ein Referenzsignal, um einen Abstand zwischen dem ersten und dem zweiten (5a) Fahrzeug zu berechnen;

f) eine Einrichtung zum Korrigieren (14a -> 14b) der Position des Verfolgungsfensters (14a), welches das Bild des zweiten Fahrzeugs (5a) umgibt, gemäß der Bildsignaldaten in dem Verfolgungsfenster (14), bevor die Verfolgung des Bilds des zweiten Fahrzeugs mit dem Verfolgungsfenster gestartet wird und während das Bild des zweiten Fahrzeugs mit dem Verfolgungsfenster (14) verfolgt wird; und

g) wobei die Positions-Korrektureinrichtung die Position des Verfolgungsfensters (14) so bewegt, daß die rechten und linken Teile des Bilds in dem Verfolgungsfenster (14) symmetrisch sind.

2. Einrichtung nach Anspruch 1, ferner umfassend eine Speichereinrichtung (8, 9) zum Speichern des Bildsignals von den Bildsensoren (3, 4).

3. Einrichtung nach Anspruch 1, wobei das Paar von optischen Systemen (1, 2) im wesentlichen vertikal angeordnet sind.

**4.** Einrichtung nach Anspruch 1, ferner umfassend einen Schalter (13), der betreibbar ist, um eine Bildverfolgungseinrichtung (10, 12) durch einen Betreiber vorzugeben.

**5.** Einrichtung nach Anspruch 1, wobei die Positions-Korrektureinrichtung, bevor die Verfolgung des zweiten Fahrzeugs mit dem Verfolgungsfenster gestartet wird, das Verfolgungsfenster (14) durch Verwenden eines ersten Suchbereichs (2k), der auf beiden Seiten des Verfolgungsfensters vorgesehen ist, positioniert, und, wenn das Bild des zweiten Fahrzeugs mit dem Verfolgungsfenster (14) verfolgt wird, das Verfolgungsfenster (14) unter Verwendung eines zweiten Suchbereichs (1k) auf beiden Seiten des Verfolgungsfensters, der kleiner als der erste Suchbereich (2k) ist, positioniert.

**Revendications**

**1.** Dispositif de mesure de la distance entre véhicules pour mesurer une distance (R) existant entre une première voiture (5) et une seconde voiture (5a) roulant devant la première voiture (5) selon le principe d'une mesure trigonométrique, comportant les caractéristiques suivantes :

   a) deux systèmes optiques (1, 2) espacés l'un de l'autre par une longueur de base (L) ;
   b) deux détecteurs d'image (3, 4) agencés de manière correspondante auxdits systèmes optiques (1, 2), sur lesquels une image de ladite seconde voiture (5a) est focalisée par l'intermédiaire desdits systèmes optiques (1, 2) pour fournir un signal d'image ;
   c) des moyens (7 à 11) pour afficher l'image de ladite seconde voiture qui a été détectée par un desdits détecteurs d'image (3, 4) ;
   d) des moyens (10, 12) pour former une fenêtre de suivi (14) qui entoure l'image de ladite seconde voiture (5a), et pour suivre l'image (5a) de ladite seconde voiture à l'aide de ladite fenêtre de suivi (14) ;
   e) des moyens (10) pour détecter la quantité de décalage entre lesdits signaux d'image desdits détecteurs d'image avec un signal d'image de ladite fenêtre en tant que signal de référence pour calculer la distance existant entre lesdites première (5) et seconde (5a) voitures ;
   f) des moyens pour corriger (14a à 14b), avant que le suivi de l'image de ladite seconde voiture à l'aide de ladite fenêtre de suivi n'ait démarré et alors que l'image de la seconde voiture est suivie à l'aide de ladite fenêtre de suivi (14), la position de ladite fenêtre de suivi (14a) entourant l'image de ladite seconde voiture (5a) conformément aux données de signal d'image de ladite fenêtre de suivi (14) ; et
   g) dans lequel lesdits moyens de correction de position déplacent la position de ladite fenêtre de suivi (14), de sorte que les parties droite et gauche de l'image de la fenêtre de suivi (14) sont symétriques.

**2.** Dispositif selon la revendication 1, comportant de plus des moyens de mémorisation (8, 9) pour mémoriser ledit signal d'image provenant desdits détecteurs d'image (3, 4).

**3.** Dispositif selon la revendication 1, dans lequel lesdits deux systèmes optiques (1, 2) sont agencés à peu près verticalement.

**4.** Dispositif selon la revendication 1, comportant de plus un commutateur (13) actif pour qu'un opérateur envoie une instruction à des moyens de suivi d'image (10, 12).

**5.** Dispositif selon la revendication 1, dans lequel lesdits moyens de correction de position, avant ledit suivi de ladite seconde voiture à l'aide de ladite fenêtre de suivi ne soit démarré, positionne ladite fenêtre de suivi (14) en utilisant une première plage de recherche (2k) agencée sur les deux côtés de la fenêtre de suivi et, lorsque l'image de ladite seconde voiture est suivie à l'aide de ladite fenêtre de suivi (14), positionne ladite fenêtre de suivi (14) en utilisant une seconde plage de recherche (1k) située sur les deux côtés de la fenêtre de suivi, qui est plus petite que ladite première plage de recherche (2k).

FIG. 1

EP 0 529 558 B1

EP 0 529 558 B1

FIG. 2

FIG. 3

FIG. 4

9

## FIG. 5

## FIG. 6

# FIG. 7

# FIG. 8

SIGNAL PROCESSING UNIT